# EUROPEAN PATENT SPECIFICATION

(11) **EP 0 797 849 B1**
(45) Date of publication and mention of the grant of the patent: **19.11.2003**
(21) Application number: 95914633.3
(22) Date of filing: 22.03.1995
(51) Int. Cl.: H01M 10/16

(54) **LEAD BATTERY**
BLEIAKKU
ACCUMULATEUR AU PLOMB

(30) Priority: 22.03.1994 SE 9400946
(43) Date of publication of application: 01.10.1997
(73) Proprietor: Advanced Power Devices, Inc., Deal Island, MD 21821 (US)
(72) Inventor: NILSSON, Ove, 440 41 Nol (SE); SUNDBERG, Erik, 254 39 Helsingborg (SE)
(74) Representative: Barlow, Roy James
(86) International application number: SE9500299
(87) International publication number: WO95026055

(56) References cited:
- WO-A-85/05227
- DE-C- 2 758 288
- US-A- 4 336 314
- PATENT ABSTRACTS OF JAPAN, Vol. 8, No. 213, E-269; & JP,A,59 098 476 (SHINKOUBE DENKI K.K.), 6 June 1984.
- PATENT ABSTRACTS OF JAPAN, Vol. 9, No. 212, E-339; & JP,A,60 074 360 (SHINKOUBE DENKI K.K.), 26 April 1985.

## Description

This invention concerns batteries having a container containing at least one positive and one negative plate-shaped electrode, separators and sulphuric acid.

The electrodes in a lead acid battery are formed by current conducting lead grids being filled with active lead material. Positive material is named PAM and negative material NAM. The most common type of electrodes are those called "pasted" plates having the current conductor designed as a grid. Between the positive and negative electrodes, or the "plates", porous separators are placed. Usually several positive and negative electrodes are mutually connected in parallel to form a "group of plates" or a cell. The current passes from the electrodes via current conductors in the upper part of the electrodes, so called lugs which are soldered to "bars", which are connected to the so called terminals. The cells are usually connected in series to form batteries with higher voltages.

During the discharge, PbSO₄ with larger volume than Pb and PbO₂ is formed within the electrodes. During discharges without any support of the electrodes, the active material will expand. This volume expansion is permanent if a resilient counter pressure is not applied. During each new discharge there is a certain increase of volume, the paste will crack and after a number of discharges positive paste (PAM) will fall out from the electrode, (the grid).

There is no corrosion within the negative electrodes. Thus only a moderate mechanical support is needed to get an almost reversible process. The surface of the positive lead grid is formed to PbO₂. The PbO₂ thus formed takes up a larger volume than the lead from which it is formed and strain will occur in the corrosion layer. During successive discharges there is some discharge of the PbO₂ on the grid surface and because of the volume growth cracks will occur, more lead is formed to PbO₂ and the grids will corrode.

The experience shows that mechanical pressure on the electrode surfaces will increase the working life. Batteries with so called pasted plates thus often comprise glass wool between the electrodes, and the cells are assembled into blocks with mechanical pressure against the cell walls and thereby also on the electrode surfaces. This pressure is maintained by assembling the groups into cell containers under pressure or into blocks of cell containers (starting batteries) having enough strength to counteract the volume increase.

In order to obtain at long working life, the positive active material, PAM, in batteries intended for longer discharges comprises high density i.e. low porosity with correspondingly lower material utilisation and thus lower capacity.

In so called tubular batteries the current conductor of the positive electrode consists, unlike in pasted plates, of parallel lead rods surrounded by active positive material which in turn is mechanically supported by surrounding porous tubes. The material of the tubes usually is comprised of braided or woven glass fibres. The diameter of these tubes is usually between 8-10 mm defining the width of the electrode. These positive electrodes are called "tube plates". One reason for tubular batteries with tubes of glass fibres having high paste porosity, i.e. low density, and thus good paste utilisation and yet long life, is that the paste is allowed to expand somewhat in the tubes by elastic elongation of the glass wool fibres and increasing tube diameter. This can cause more than 10% increase of volume during discharge. During charge the strained glass wool fibres return the volume of the positive paste to its state before the discharge. The strength of the glass fibres will however be reduced during the time.

WO 85/05227 (Sundberg) concerns a device having semi-tubes, however without support in all directions. Also the lug lacks support.

Also in batteries with pasted plates the compressed and relatively thick glass wool, which often is used as the separator, has a certain resilient effect. In batteries having rectangular containers this pressure exercised against the flat cell walls is insufficient to counteract the expansion. The free volume above and below the electrodes allow some expansion, and since the electrodes are not entirely supported by the walls of the container, they can also grow somewhat in width. The battery according to US-A-4 336 314 has rectangular plates which however lack support for upper and lower electrode sides.
DE-2 758 288 concerns a sealed oxygen recombination cell but does not mention support for electrode sides.

Also in known batteries having the cells essentially entirely enclosed inside a plastic material, the resilience of the flat walls will bring about insufficient support (JP 59-98476 and 60-74360).

The problems with the known batteries are solved by the features according to the characterizing portions of the independent claims.

According to this invention which concerns lead batteries with long working life, all the outer surfaces of the electrodes are put under high mechanical pressure and the projected electrode surface is maintained unchanged through absolute support from all sides.

The invention will now be described in light of embodiments and with reference to the drawings, wherein:
fig 1 shows an embodiment of the invention according to the invention,
fig 2 shows an electrode with a lug,
fig 3 shows an electrode with detail in an enlarged scale,
fig 4 shows an electrode pile,
fig 5a, b and c show different arrangements for securing the positive material,
fig 6 shows a two cell battery according to the invention,
fig 7 illustrates a principle with respect to rectangular plates, and
fig 8a, b and c show volume filling arrangements inside a battery container.

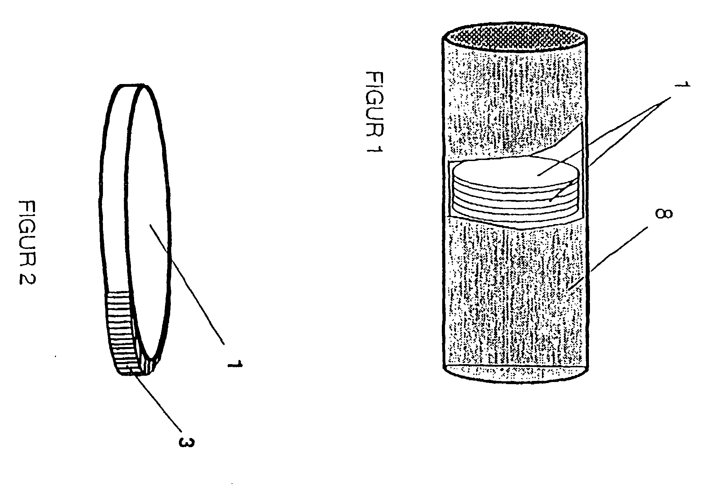

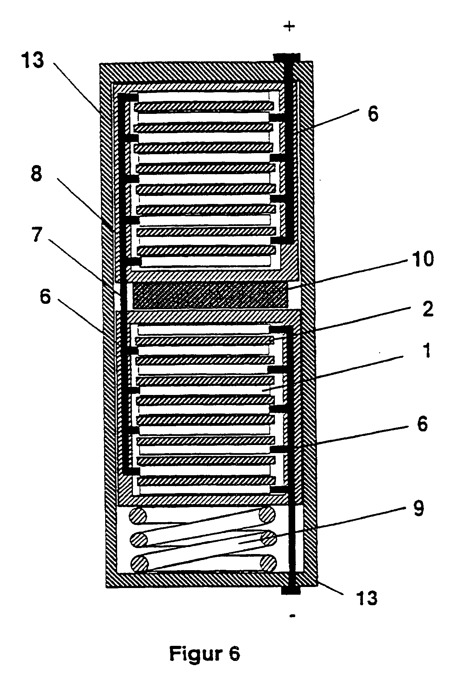

One example of obtaining such a support is illustrated in fig 1. Here the electrodes 1 in fig 1 are assembled in tubular, constant volume containers 8 which, through the cell container (fig 1) or the support from an outer container (13 in fig 6) support the circumferences of the electrodes (in first directions, which by the container or the vessel is defined as radial directions) in order to get an unchanged electrode surface area. Through high mechanical pressure on the electrode surface (in a second direction, which is defined by the container or the vessel as axial) and constant volume of the electrode group, the working life can be maximised since the corrosion during charging is controlled. Higher pressure limits the depth of the discharge. During the discharge, lead sulphate is formed which comprises essentially larger volume than the PbO₂. When the pores in the positive electrodes are filled with lead sulphate and the expansion is prevented by an outer counter pressure, no more electrolyte can diffuse into the electrode and the discharge is terminated.

With sufficient pressure and support, the expansion stops and the corrosion decreases. Because of an absolutely unchanged volume the working life will be multiplied.

The corrosion of positive lead grids can not be avoided, since the grids have a possibility of a volume increase at the expense of the volume of the porous active material. Compressed PbO₂ has, however, a significantly better current conductivity than the porous paste, and the PbO₂ which is formed by grid corrosion has a high density and a good electric conductivity: about 1/10 of that of lead. It is known that completely corroded lead spines in tubular batteries, where the pressure in the tubes is high, may act as current conductors during many years, giving the battery good capacity at not too high loads. In the same way these volume controlled batteries, where the whole group is under high mechanical pressure, obtain a very long life and function with full capacity during many thousand discharges also with completely corroded current conductors.

Also a new battery can be made without the lead grid. Thus a thin lead foil is firstly formed to PAM, and already during the formation the lead corrodes to PbO₂. In order to handle the plates during manufacture, a plastic grid may be used. Use of plastic grids in negative electrodes is previously known.

The pressure on the positive electrode surfaces can be resilient (spring action), since a small expansion of the paste during discharge can be allowed without influencing the working life of the material, provided the pressure on the electrode surface is sufficiently high so that the volume retains its original volume after a discharge and the subsequent charge. Without this expansion the supply of electrolyte to the active material in the electrode will decrease when the pores of the paste are filled with lead sulphate and thus the capacity will be reduced.

In a battery under pressure according to the invention a controlled expansion of the paste during discharge and compression during charge can be obtained by resilient separators or by a resilient element, e. g. a rubber seal being placed in the cells or in the batteries, and providing pressure on the electrode surface.

This effect has been applied in certain tubular batteries with elastic tubes and to some extent in pasted batteries with flexible separators, but the effect is significantly better in a construction with fix, unchanged electrode area according to the invention. The active material is allowed to expand during the discharge only perpendicular to the surface of the electrode (in the second or axial direction) and not in the plane of the electrode (in the first or radial directions). During the charge the expansion is pressed back. A certain resilient effect can be obtained with separators made from relatively thick, compressed glass wool and this is part of this invention.

With the high pressure on the pasted surface in batteries according to the invention, the expanding property of ordinary glass wool is not always sufficient and an extra spring load on the electrode group may be necessary.

In order to fully regulate and limit the discharge, the pressure on the electrode surfaces must be high, from 0.5 up to 10 kp/cm² (0.49 -10⁵ - 9.81 -10⁵ Pa) , or higher. The pressure on the electrode surface will determine also the depth of the discharge, because of the volume increase limitation and thus the supply of electrolyte. The pressure is limited to what the separators can withstand before breaking. If springs are used to control the volume, it is easy to vary the pressure according to the application, (desired capacity) by using, springs with different spring constant. Less pressure may lead to higher capacity, but also shorter life. In a battery according to the invention directed to having long working life, a mechanical pressure of 0.98 -10⁵ - 9.81 -10⁵ Pa is preferred and in a battery directed to high capacity a mechanical pressure of 0.49 -10⁵ - 0.98 -10⁵ Pa. Expansion, i.e. the increase of the electrode thickness, of up to 15% is possible with the corresponding shrinking during charge.

To be able to prevent the surface area of the electrode to increase, an outer container with constant volume e.g. a steel or composite tube is used and the cells are made with preferably almost circular plates, fig 2, and the cell group will have the shape of a tube, fig 1.

By the high pressure of porous glass wool against the electrode surfaces, no paste can leave the electrode and no extra space (sludge volume) for fallen out material is needed. The cells will therefore have a smaller volume than corresponding cells according to the previous art.

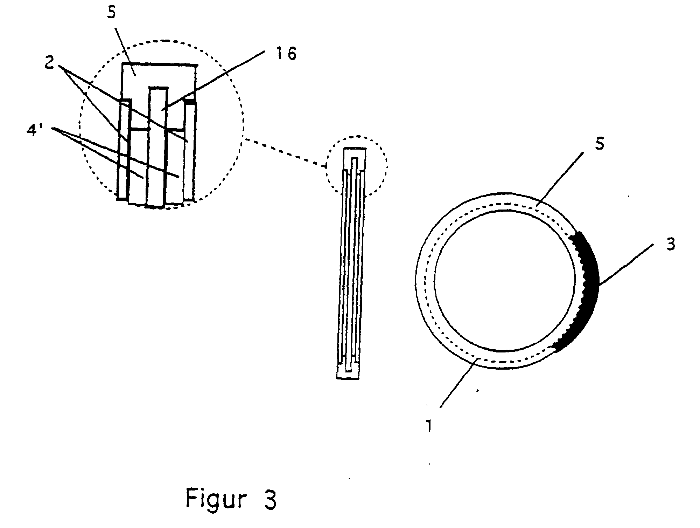

In cells according to the invention, the circular electrodes may have one or more "lugs" 3, more like low ridges, on the sides. These lugs may extend over almost the half circumference for the best current distribution. The lugs with connections are included in the circular electrode. Fig 3 shows an electrode 1 which has the grid filled with active paste material 4'. The electrode is provided with a current connector in the form of a lug 3. In order to prevent short circuits the circumferences of both the positive and the negative electrodes are protected by a U-profile 5 of a plastics material which envelopes the edges of the electrodes or the electrode paste according to fig 3, 4, 5. If the frames of the electrode are made from a plastics material, the U-profile is not always necessary.

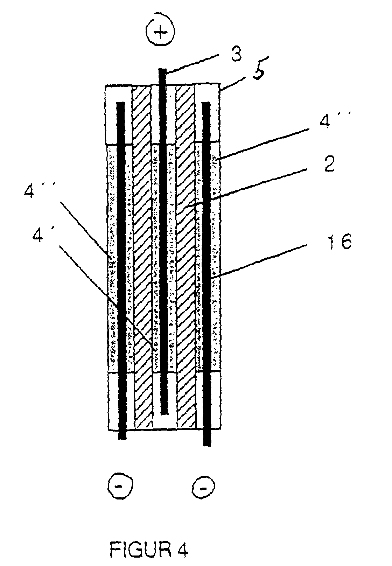

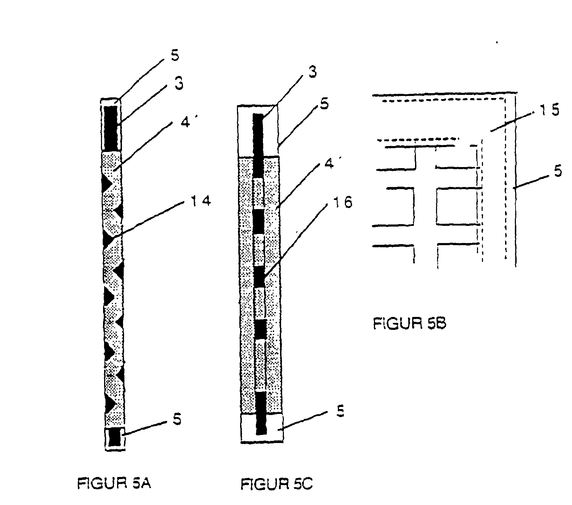

The wall thickness of the U-profile may be thin, preferably 0.1-0.3 mm and a thickening of the plate at the edges by some tenth of a mm will appear. This thickening will however be pressed into the separators and is in general of no concern. If stronger profile is desired, it can be put onto the lead grid before the application of the active paste 4', 4'', so that the U-profile then determines the thickness of the electrode as shown in fig 5. At the current connector, the lug 3, the U-profile 5 may have a recess, so that the lugs 3 from the positive and the negative plates protrude, as is shown in figure 4, through the U-profile, such that they can then be welded to a current conductor bar 6 in Figure 6.

The positive and negative lugs are preferable arranged opposite to each other and the positive and negative current connector lugs 3 are situated at the opposite sides of the cell, and this construction is part of the invention. Fig 6 shows a twin cell battery. The coupling, i.e. the connection 7 to the next cell is therefore also provided at opposite sides. The conductor 7 can have the shape of an expansion coil to allow some movability. The lugs 3 are welded to the bar 6 which is embedded in the container wall 8. A spring 9 compresses the cells. It may suitably be made from resilient soft rubber only and be placed 10 between two cells thus exerting pressure on both cells. Alternatively a spring 9 and a resilient rubber means 10 between the cells are combined as is shown in fig 6. The cell walls are thin and the cells are placed in an outer constant volume container 13.

The description and the figures illustrate examples of constructions according to the invention.

Circular cylindrical batteries most easily take up the pressure without change of volume and may therefore have thin walls.

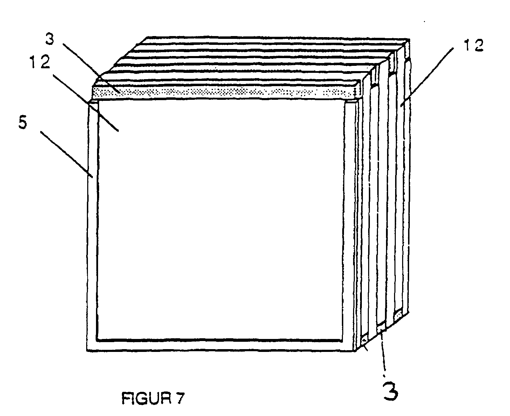

If the containers are rigid enough, the electrodes and the cross section of the cells may have other forms, e.g. rectangular. Ordinary starting battery plates may be used resulting in a very long life battery, the same as or better than the tubular batteries of today. To obtain better current distribution these rectangular plates 12 may have the lugs 3 located opposite to each other and have two or three lugs or one lug as wide as the electrode, fig 7, and being having as small height as possible. The profiles 5 surround the electrodes on all sides, however the profiles are provided with apertures in the profile where the lugs protrude, and are assembled with a support all around the electrode from the container wall. In a similar way as with circular electrodes the separators 2 are placed between the electrodes.

It should be noted that by "first or radial directions" is intended directions from the periphery and inwards, also for electrodes with other forms than circular. By "a second or axial direction" is intended a direction perpendicular to the first directions, i.e. in a length direction of an electrode pile.

If the containers are mechanically week, they can, as is shown in fig 6, be fitted exactly into a rigid outer container with constant volume 13, and since each single plate is supported by the walls of the cell, the circumference of the electrodes will be maintained during discharge without possibility of expanding in any direction, whilst the thickness of the electrode is controlled by resilient pressure.

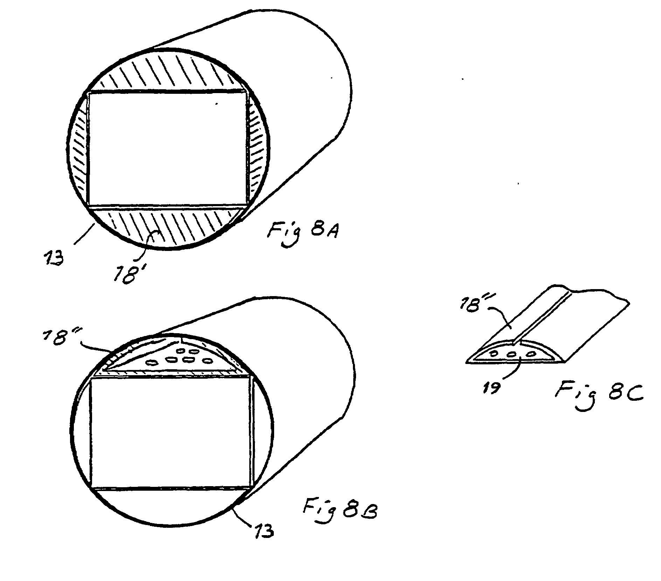

If rectangular electrodes are used (starting battery plates), they may be enclosed into rectangular tubes with constant volume. Circular tubes may however be made essentially lighter at high pressure and therefore rectangular electrodes may be enclosed into circular tubes if the electrodes are supported on all four sides by supporting profiles 15 which contact the outer container 13 as is shown in fig 8A, B.

The supporting profiles 18' may be slotted and perforated, fig 8B, C and comprise cavities with for example extra electrolyte absorbing glass wool 19 in order to create extra acid volume. Porous separators 2 saturated with electrolyte may be made larger than the electrodes and contact the plastic support and extend to the outer wall. The electrolyte volume becomes larger without increasing the electrode distance. The outer container 13 may be made of steel for easier cooling. According to the above, the conductors 6 can be provided with an expansion coil if a certain expansion of the electrode during the discharge is desired.

Ordinary lead grids for conduction of current and securing the paste, fig 5A, have staggered grids 14 for better securing the paste and are in that case provided with a lead frame 15 around the grid. The high pressure in the batteries according to the invention allows the positive electrode to be made simply from a grid, which has been punched out from a lead foil 16 as current conductor, fig 5C. The U-profile 5 determines the thickness of the positive active material 4' on each side of the lead conductor. The grid in the positive plate corresponds to the lead spines in the tubular battery, i.e. they are centrally placed in the electrode and completely covered by the electrode paste. Since the current conductor also after having been completely reformed to PbO₂ shall work with reasonable low resistance, the thickness shall not be too small compared to the plate thickness.

The absolute limitation and control of the volume according to the invention will allow the electrodes in power batteries to be made very thin, in certain cases 0.5 mm or less, with active material received from so called Plante' formation of the lead in the positive electrode. Because of the high pressure and the current connectors being placed opposite to each other, these batteries will have an even current distribution which is very important with respect to a current conductor converted to PbO₂. The electrodes in these cells should have an extra high pressure for maximum conductivity of PbO₂ in the current conducting parts.

In order to obtain entirely closed cells with high so called oxygen recombination, the pressure of the liquid in the cells shall be high, 4 - 10 atm or higher. At this pressure the solubility of the oxygen is so high that the oxygen which is formed during charging, before the hydrogen, in its soluted form oxidises the negative plate, which therefore is not fully charged and hydrogen gas formation is prevented. With the mechanical strength of the cells according to the invention such liquid pressure may easily be maintained. This high liquid pressure is also part of the invention.

In order to decrease the gas pressure in the case of maltreatment, the cells have been provided by safety valves.

## Claims

1. A lead battery comprising a container containing at least one positive and one negative plate-shaped electrode, separators and sulphuric acid, wherein each electrode includes a lug for electrical connection and the projected area of the electrodes including the lugs is maintained unchanged within the entire periphery thereof by being supported by the walls of the container in first directions perpendicular to the walls, said container having sufficient mechanical strength to counteract the pressure from the electrodes so as to prevent their expansion in the first directions during discharge, the lead battery also being arranged to restrict the growth of the electrodes during cycling in a second direction perpendicular to said first directions.

2. A battery according to claim 1, wherein the container is provided with a safety valve against excess pressure.

3. A battery according to claim 1 or 2, wherein the electrodes consist of current conducting lead grids which are filled with active material and a pressure is applied on the electrode surfaces of at least 0,49 -10⁵ Pa (0,5 kp/cm²) and preferably 0,98 -10⁵ - 9,81 -10⁵ Pa (1 - 10 kp/cm²) so as to maximize the conductivity of Pb0₂ in the corroded grids.

4. A battery according to any one of the previous claims, lead conductors being formed to Pb0₂ function as current conducting elements with a lead lug and plastic grids and with no or insignificant lead grid.

5. A battery according to any one of the previous claims, further comprising a resilient insert inside the container, which is a cell container or an outer container allowing a certain expansion of the active material in the second direction during discharge and return of the expansion during charge.

6. A battery according to any one of the previous claims, wherein the depth of discharge is regulated by controlling the pressure on the electrodes.

7. A battery according to any one of the previous claims, wherein a high liquid pressure is applied, preferably about 1,0 -10⁶ Pa (10 atm), in order to obtain good oxygen recombination.

8. A battery according to any one of the previous claims, wherein the electrical connections to the respective positive and negative electrodes are located on opposite sides of the electrodes.

9. A battery according to any one of the previous claims wherein the container comprises a circular cylindrical tube and volumes between the electrodes and the circular cylindrical tube are filled with supporting profiles, said profiles optionally containing extra electrolyte.

10. A lead battery with one or more cells, each cell comprising a container containing at least one positive and one negative plate-shaped electrode, separators and sulphuric acid, wherein each electrode includes a lug for electrical connection and the projected area of the electrodes including the lugs is maintained unchanged within the entire periphery thereof by being supported by the walls of the container in first directions perpendicular to the walls, said container having sufficient mechanical strength to counteract the pressure from the electrodes so as to prevent their expansion in the first directions during discharge, the lead battery also being arranged to restrict the growth of the electrodes during cycling in a second direction perpendicular to said first directions;
the surfaces of said electrodes being arranged to be compressed in the second direction with a mechanical pressure of 0,49 -10⁵ - 9,81 -10⁵ Pa (0,5 - 10 kp/cm²), each cell being sealed in this condition.

11. A battery according to claim 10, wherein the separators have a resilient effect, or resilient means acting on the cell or the cell group under said mechanical pressure allow an expansion of up to 15% of the thicknesses of the electrodes and mainly returns said expansion under the resilient action.

12. A battery according to claim 10 or 11, wherein the container is tube-shaped with the electrodes placed in 90° angle with respect to the length direction of the tube, and the container comprises end sections being able to withstand pressure from the inside of the battery.

13. A battery according to claim 10, 11 or 12, wherein a seal is provided for each cell such that each cell maintains internal pressure generated during battery cycling up to and including 1,0 -10⁶ Pa (10 atm).

14. A battery according to claim 13, wherein there is a means provided for relief of excess gas pressure.

15. A lead battery according to claim 10 with a plurality of said cells wherein each cell comprises at least two bars made of lead; wherein
the container is at least approximately tubular, thereby defining an axial direction and radial directions;
each electrode has an approximately circular cross-section, with a current collecting lug placed at the outer periphery;
the electrodes are arranged with circular cross-section approximately transverse to the length direction of the tube and are restricted in movement in this, the axial, direction by application of the mechanical pressure along the axial direction;
the lugs of all negative electrodes are in electrical contact with a first lead bar;
the lugs of the positive electrodes are in electrical contact with a second lead bar; and
the electrodes are surrounded by a non-electrically conducting U-profile, which is in contact with the inner surface of the container, thereby supporting the electrodes, preventing direct contact between the electrodes and the container and restricting the movement of the electrodes in radial directions.

16. A battery for long life according to any one of claims 10 to 15, wherein a mechanical pressure is applied on the electrode surfaces in the range 0,98 -10⁵ - 9,81 -10⁵ Pa (1,0 - 10kp/cm²).

## Patentansprüche

1. Bleibatterie mit einem Behälter, der wenigstens eine positive und eine negative plattenförmige Elektrode, Trennwände und Schwefelsäure umfasst, wobei jede Elektrode einen Ansatz für eine elektrische Verbindung umfasst und der hervorstehende Bereich der Elektroden einschließlich der Ansätze in seinem gesamten Umfang aufgrund der Unterstützung durch die Wände des Behälters in ersten Richtungen im rechten Winkel zu den Wänden unverändert bleibt, wobei der Behälter über eine ausreichende mechanische Festigkeit verfügt, um dem Druck der Elektroden zu widerstehen und so deren Ausdehnung in den ersten Richtungen während der Entladung zu verhindern, wobei die Bleibatterie so angeordnet ist, dass die Ausdehnung der Elektroden während der Lade- und Entladezyklen in eine zweite Richtung im rechten Winkel zur ersten Richtung begrenzt wird.

2. Batterie nach Anspruch 1, wobei der Behälter mit einem Überdruck-Sicherheitsventil versehen ist.

3. Batterie nach Anspruch 1 oder 2, wobei die Elektroden aus stromleitenden Bleigittern bestehen, die mit aktivem Material gefüllt sind und ein Druck von wenigstens 0,49 -10⁵ Pa (0,5 kp/cm²) und vorzugsweise 0,98-10⁵ - 9,81 -10⁵ Pa (1-10 kp/cm²) an den Elektrodenoberflächen angelegt wird, um die Leitfähigkeit von PbO₂ in den korrodierten Gittern zu maximieren.

4. Batterie nach einem der vorstehenden Ansprüche, wobei Bleileiter aus PbO₂ als stromführende Elemente mit einem Bleiansatz und einem Kunststoffgitter und mit keinem oder nur einem unbedeutenden Bleigitter dienen.

5. Batterie nach einem der vorstehenden Ansprüche, die weiter einen federnden Einsatz im Inneren des Behälters umfasst, bei dem es sich um einen Zellenbehälter oder um einen Außenbehälter handelt, der eine gewisse Ausdehnung des aktiven Materials in der zweiten Richtung während der Entladung und ein Zusammenziehen der Ausdehnung während der Ladung zulässt.

6. Batterie. nach einem der vorstehenden Ansprüche, wobei die Höhe der Entladung durch den regelbaren Druck auf die Elektroden gesteuert ist.

7. Batterie nach einem der vorstehenden Ansprüche, wobei ein hoher Flüssigkeitsdruck, vorzugsweise ungefähr 1,0-10⁶ Pa (10 atm), angelegt wird, um eine gute Sauerstoffverbindung zu erhalten.

8. Batterie nach einem der vorstehenden Ansprüche, wobei sich die elektrischen Verbindungen zu den jeweiligen positiven und negativen Elektroden an gegenüberliegenden Seiten der Elektroden befinden.

9. Batterie nach einem der vorstehenden Ansprüche, wobei der Behälter einen runden, zylindrischen Schlauch umfasst und die Räume zwischen den Elektroden und dem runden, zylindrischen Schlauch mit Stützprofilen gefüllt sind, wobei die Profile zusätzliche Elektrolyten enthalten können.

10. Bleibatterie mit einer oder mehreren Zellen, wobei jede Zelle wenigstens einen Behälter mit einer positiven und einer negativen plattenförmigen Elektrode, Trennwänden und Schwefelsäure umfasst, wobei jede Elektrode einen Ansatz für eine elektrische Verbindung umfasst und der hervorstehende Bereich der Elektroden einschließlich der Ansätze in seinem gesamten Umfang aufgrund der Unterstützung durch die Wände des Behälters in ersten Richtungen im rechten Winkel zu den Wänden unverändert bleibt, wobei der Behälter über ausreichende mechanische Festigkeit verfügt, um dem Druck der Elektroden zu widerstehen und so deren Ausdehnung in den ersten Richtungen während der Entladung zu verhindern, wobei die Bleibatterie so angeordnet ist, dass die Ausdehnung der Elektroden während der Lade- und Entladezyklen in eine zweite Richtung im rechten Winkel zur ersten Richtung begrenzt wird;
wobei die Oberflächen der Elektroden so angeordnet sind, dass sie in der zweiten Richtung mit einem mechanischen Druck von 0,49 -10⁵ Pa - 9,81 -10⁵ Pa (0,5-10 kp/cm²) zusammengedrückt werden, wobei jede Zelle in diesem Zustand abgedichtet ist.

11. Batterie nach Anspruch 10, wobei die Trennwände eine federnde Wirkung haben oder federnde Mittel, die auf die Zelle oder die Zellengruppe unter dem mechanischen Druck einwirken, ermöglichen eine Ausdehnung von bis zu 15 % der Dicke der Elektroden, wobei die Expansion unter der federnden Einwirkung im Wesentlichen zurückkehrt.

12. Batterie nach Anspruch 10 oder 11, wobei der Behälter schlauchförmig ist und die Elektroden in einem 90°-Winkel zur Längsrichtung des Schlauchs angeordnet sind und der Behälter Endabschnitte umfasst, die dem Druck aus dem Inneren der Batterie widerstehen können.

13. Batterie nach Anspruch 10, 11 oder 12, wobei eine Dichtung für jede Zelle vorgesehen ist, so dass jede Zelle einen Innendruck von bis zu einschließlich 1,0 -10⁶ Pa (10 atm) aufrechterhalten kann, der bei den Ladeund Entladezyklen der Batterie entsteht.

14. Batterie nach Anspruch 13, wobei ein Mittel zum Ablassen von Gasüberdruck vorgesehen ist.

15. Bleibatterie nach Anspruch 10 mit mehreren Zellen, wobei jede Zelle wenigstens zwei Stäbe aus Blei umfasst; wobei
der Behälter wenigstens ungefähr schlauchförmig ist, und so eine axiale Richtung und radiale Richtungen definiert;
jede Elektrode einen ungefähr runden Querschnitt mit einem Stromabnehmeransatz am äußeren Umkreis hat;
die Elektroden so angeordnet sind, dass die runden Querschnitte ungefähr quer zur Längsrichtung des Schlauchs angeordnet sind und ihre Beweglichkeit in dieser axialen Richtung durch Anlegen eines mechanischen Drucks entlang der axialen Richtung eingeschränkt ist;
die Ansätze aller negativen Elektroden in elektrischer Verbindung mit einem ersten Bleistab stehen;
die Ansätze aller positiven Elektroden in elektrischer Verbindung mit einem zweiten Bleistab stehen; und
die Elektroden von einem elektrisch nicht leitfähigen U-Profil umgeben sind, das mit der Innenoberfläche des Behälters in Berührung ist und die Elektroden so stützt und einen direkten Kontakt zwischen den Elektroden und dem Behälter vermeidet und die Beweglichkeit der Elektroden in radialen Richtungen einschränkt. nach einem der Ansprüche 10 bis

16. Bleibatterie mit langer Lebensdauer nach einem der Ansprüche 10 bis 15, wobei ein mechanischer Druck im Bereich 0,98 -10⁵ - 9,81 -10⁵ Pa (1,0-10 kp/cm²) an den Elektrodenoberflächen angelegt ist.

## Revendications

1. Accumulateur au plomb comprenant un boîtier contenant au moins une électrode positive et une électrode négative en forme de plaques, des séparateurs et de l'acide sulfurique, dans lequel chaque électrode comporte une cosse de connexion électrique et la partie saillante des électrodes comportant les cosses reste inchangée sur tout son pourtour grâce au fait qu'elle est supportée par les parois du boîtier dans des premières directions perpendiculaires aux parois, ledit boîtier ayant une résistance mécanique suffisante pour neutraliser la pression exercée par les électrodes afin d'empêcher leur dilatation dans les premières directions pendant la décharge, l'accumulateur au plomb étant également agencé pour limiter le grossissement des électrodes, dans une deuxième direction perpendiculaire auxdites premières directions, pendant les cycles de charge/décharge.

2. Accumulateur selon la revendication 1, dans lequel le boîtier est muni d'une valve de sécurité empêchant une pression excessive.

3. Accumulateur selon la revendication 1 ou 2, dans lequel les électrodes sont constituées par des grilles en plomb conductrices de courant qui sont remplies de matière active et une pression d'au moins 0,49 - 10⁵ Pa (0,5 kp/cm²) et de préférence de 0,98 - 10⁵ - 9,81 - 10⁵ Pa (1 - 10 kp/cm²) est appliquée aux surfaces des électrodes pour obtenir une conductivité maximale de PbO₂ dans les grilles corrodées.

4. Accumulateur selon l'une quelconque des revendications précédentes, dans lequel des conducteurs en plomb constitués de PbO₂ servent de conducteurs de courant avec une cosse en plomb et des grilles en matière plastique et sans ou pratiquement sans grille en plomb.

5. Accumulateur selon l'une quelconque des revendications précédentes, comprenant en outre une pièce rapportée élastique à l'intérieur du boîtier, qui est un boîtier à éléments, ou un boîtier extérieur permettant une certaine dilatation de la matière active pendant la décharge et une annulation de la dilatation pendant la charge.

6. Accumulateur selon l'une quelconque des revendications précédentes, dans lequel la profondeur de décharge est régulée en commandant la pression exercée sur les électrodes.

7. Accumulateur selon l'une quelconque des revendications précédentes, dans lequel une forte pression de liquide, de préférence d'environ 1,0 - 10⁶ Pa (10 atm) est appliquée pour obtenir une bonne recombinaison d'oxygène.

8. Accumulateur selon l'une quelconque des revendications précédentes, dans lequel les connexions électriques aux électrodes positive et négative respectives sont situées de part et d'autre des électrodes.

9. Accumulateur selon l'une quelconque des revendications. précédentes, dans lequel le boîtier comprend un tube cylindrique circulaire, et des volumes entre les électrodes et le tube cylindrique circulaire sont remplis par des profilés de support, lesdits profilés contenant éventuellement un supplément d'électrolyte.

10. Accumulateur au plomb avec un ou plusieurs éléments, chaque élément comportant un boîtier contenant au moins une électrode positive et une électrode négative en forme de plaques, des séparateurs et de l'acide sulfurique, dans lequel chaque électrode comporte une cosse de connexion électrique et la partie saillante des électrodes comportant les cosses reste inchangée sur tout son pourtour grâce au fait qu'elle est supportée par les parois du boîtier dans des premières directions perpendiculaires aux parois, ledit boîtier ayant une résistance mécanique suffisante pour neutraliser la pression exercée par les électrodes afin d'empêcher leur dilatation dans les premières directions pendant la décharge, l'accumulateur au plomb étant également agencé pour limiter le grossissement des électrodes, dans une deuxième direction perpendiculaire auxdites premières directions, pendant les cycles de charge/décharge ;
les surfaces desdites électrodes étant conçues pour être comprimées dans la deuxième direction avec une pression mécanique de 0,49 - 10⁵ - 9,81 - 10⁵ Pa (0,5 - 10 kp/cm²), chaque élément étant hermétiquement fermé dans cet état.

11. Accumulateur selon la revendication 10, dans lequel les séparateurs ont un effet élastique, ou des moyens élastiques agissant sur l'élément ou le groupe d'éléments soumis à ladite pression mécanique, permettent une dilatation d'un maximum de 15% de l'épaisseur des électrodes et annulent sensiblement ladite dilatation du fait de l'action élastique.

12. Accumulateur selon la revendication 10 ou 11, dans lequel le boîtier a la forme d'un tube, les électrodes étant placées suivant un angle de 90° par rapport à la direction longitudinale du tube, et le boîtier comporte des parties d'extrémités aptes à résister de l'intérieur de l'accumulateur à la pression.

13. Accumulateur selon la revendication 10, 11 ou 12, dans lequel un moyen d'étanchéité est prévu pour chaque élément de façon que chaque élément maintienne la pression intérieure générée pendant les cycles de charge/décharge de l'accumulateur jusqu'à 1,0 - 10⁶ Pa (10 atm) inclusivement.

14. Accumulateur selon la revendication 13, dans lequel un moyen est prévu pour libérer l'excédent de gaz sous pression.

15. Accumulateur au plomb selon la revendication 10 avec une pluralité desdits éléments, dans lequel chaque élément comporte au moins deux barreaux en plomb ; dans lequel
le boîtier est au moins approximativement tubulaire, définissant de ce fait une direction axiale et des directions radiales ;
chaque électrode a une section transversale approximativement circulaire, une cosse collectrice de courant étant placée sur le pourtour extérieur ;
les électrodes sont conçues avec une section transversale circulaire approximativement transversale à la direction longitudinale du tube et leur mouvement dans ladite direction axiale est limité par application de la pression mécanique dans la direction axiale;
les cosses de toutes des électrodes négatives sont électriquement au contact d'un premier barreau en plomb ;
les cosses des électrodes positives sont électriquement au contact d'un deuxième barreau en plomb ; et
les électrodes sont entourées par un profilé en U électriquement non-conducteur, qui est au contact de la surface intérieure du boîtier, en supportant de ce fait les électrodes, ce qui empêche un contact direct entre les électrodes et le boîtier et limite le mouvement des électrodes dans les directions radiales.

16. Accumulateur à longue durée de vie selon l'une quelconque des revendications 10 à 15, dans lequel une pression mécanique de l'ordre de 0,98 - 10⁵ - 9,81 - 10⁵ Pa (1,0 - 10 kp/cm²) est appliquée aux surfaces des électrodes.
